# EUROPEAN PATENT SPECIFICATION

(11) **EP 4 399 425 B1**
(45) Date of publication and mention of the grant of the patent: **30.07.2025**
(21) Application number: 22777342.1
(22) Date of filing: 09.09.2022
(51) Int. Cl.: F16K 1/30, F16K 15/06, F16K 47/00, F17C 13/04

(54) **NON-RETURN VALVE FOR AN AUTOMOTIVE FUEL CELL SYSTEM**
RÜCKSCHLAGVENTIL FÜR EIN KRAFTFAHRZEUG-BRENNSTOFFZELLENSYSTEM
CLAPET ANTI-RETOUR POUR UN SYSTÈME DE PILE À COMBUSTIBLE AUTOMOBILE

(30) Priority: 10.09.2021 IT 202100023450
(43) Date of publication of application: 17.07.2024
(73) Proprietor: OMB Saleri S.p.A. - Societa' Benefit, 25126 Brescia (IT)
(72) Inventor: BERARDI, Mario, 25126 BRESCIA (IT); BERNARDI, Nicola, 25126 BRESCIA (IT); MONDINELLI, Francesco, 25126 BRESCIA (IT); LIÒ, Federico, 25126 BRESCIA (IT)
(74) Representative: Pulieri, Gianluca Antonio
(86) International application number: PCT/IB2022/058505
(87) International publication number: WO 2023/037303

(56) References cited:
- EP-A1- 2 765 340
- FR-A1- 2 838 805
- JP-A- 2016 188 649
- US-A1- 2019 170 303

## Description

The present invention is in the field of valves for fuel cell automotive systems, and specifically in the field of valves for managing the hydrogen flow between a tank in which the gas is compressed at high pressure and the fuel cells. In particular, a non-return valve forms the subject matter of the present invention.

In a fuel cell automotive system, hydrogen is stored in a high-pressure tank, typically 700 or 350 bars. For filling, a nozzle is applied to a main inlet, from which the tank is fed. A non-return valve is generally placed along the supply line between the main mouth and the tank, which valve is necessary to prevent hydrogen from escaping when the nozzle is detached.

A multi-function valve (OTV) is applied to a flange of the tank, which valve, when connected to the supply line, allows hydrogen to be fed into the tank (refilling function) and sent to user devices downstream (fueling function). The OTV valve often contains numerous functional groups, suitable for performing safety functions or improving the operation of said valve. Among these functional groups, there is also a non-return valve.

An example of an OTV valve with a non-return valve is illustrated in Italian patent application for invention No. 10 2021 000 016 742 in the Applicant's name. Patent documents JP 2016 188649 A and EP 2 765 340 A1 disclose known non-return valves according to the preamble of claim 1.

During the filling operations, the hydrogen flow undergoes fluctuations due, for example, to the pumping means at the filling station; these fluctuations are particularly intense during the early stages of filling, when the tank is practically empty, and during the final stages, when the tank is practically full. Said fluctuations are the basis of undesirable vibratory phenomena in the valves.

The object of the present invention is to construct a non-return valve equipped with a suitable damping device to prevent or limit said vibratory phenomena.

Said object is achieved by a non-return valve according to claim 1. The dependent claims describe additional advantageous embodiments of the invention.

The features and the advantages of the non-return valve according to the present invention appear more clearly from the following description, made by way of indicative and non-limiting example with reference to the figures of the accompanying drawings, in which:
- Fig. 1 is a schematic view of a portion of a gas flow management apparatus for a fuel cell traction system equipped with a non-return valve according to the present invention;
- Fig. 2 shows a non-return valve according to an embodiment of the present invention;
- Fig. 3 shows a shutter of the non-return valve according to an embodiment of the present invention;
- Fig. 4 and 5 depict a plan view and a longitudinal sectional view, respectively, of a damper ring of the non-return valve according to an embodiment of the present invention;
- Fig. 6 shows the non-return valve from Fig. 3, in a closing configuration;
- Fig. 7 is an enlargement of the box VII in Fig. 6.
- Fig. 8 shows the non-return valve in Fig. 3, in an opening configuration;
- Fig. 9 is an enlargement of the box IX in Fig. 8;
- Fig. 10 shows a non-return valve according to an example, not part of the present invention;
- Fig. 11 and 12 depict a plan view and a longitudinal sectional view, respectively, of a damper ring of the non-return valve in Fig. 10.

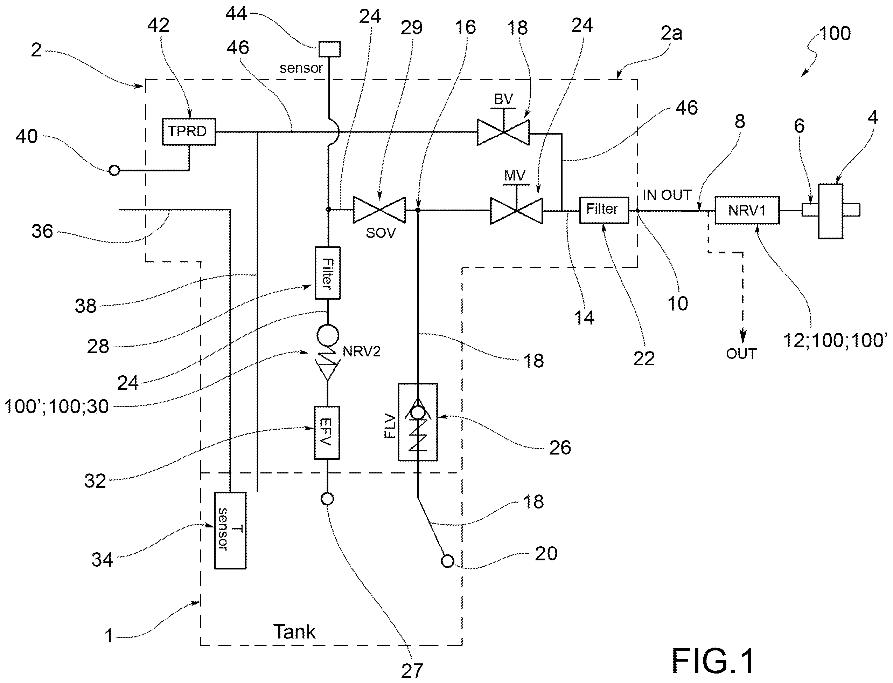

Fig. 1 schematically depicts a portion of a gas flow management apparatus for a fuel cell traction system. The apparatus comprises a tank 1 in which hydrogen is compressed at high pressure, such as 350 or 700 bars.

A multifunction valve 2 (OTV valve) suitable for managing the gas flow entering the tank during filling (filling step) and exiting the tank to downstream user devices during vehicle use (fueling step) is applied to the flange of the tank 1.

For filling, a nozzle 4 from a filling station is applied to a main mouth 6 of the apparatus, from which a supply line 8 runs which is fluidically connected to an inlet mouth 10 of the OTV valve 2.

The apparatus comprises a first non-return valve 12 (NRV1 valve), operating along the supply line 8, upstream of the OTV valve 2.

The OTV valve 2 comprises a valve body 2a, usually in one piece, e.g., made of aluminum, into which ducts and compartments are made that form the gas transit lines and the seat of components of the valve.

The OTV valve 2 has an inlet/outlet line 14 that extends from the inlet mouth 10 to a branch point 16, from where an inlet line 18 runs which extends to the filling mouth 20 through which gas is delivered into the tank 1.

Preferably, a first filter 22 is operational along the inlet/outlet line 14 and, preferably downstream thereof, considering the direction of the gas during filling, a first manually operable opening/closing valve 24 (MV valve) is also operational therealong, which valve, during normal operation of the apparatus, is open to allow the gas flow to pass through.

Preferably, moreover, the OTV valve 2 comprises a flow limiting valve 26 (FLV valve) which is open during the normal filling operations of the tank 1, operating along the inlet line 18, preferably downstream of the MV valve 24.

From the branch point 16, moreover, an outlet line 24 runs which terminates in an outlet mouth 27 through which the gas in the tank 2 is delivered to the user devices.

The OTV valve 2 comprises a magnetically operable solenoid valve 29 (SOV valve) which is operational along the outlet line 24, closed during filling operations and open during the use of the apparatus.

Preferably, the OTV valve 2 comprises a second filter 28 which is operational along the outlet line 24, preferably downstream of the SOV valve 29.

The OTV valve 2 further comprises a second non-return valve 30 (NRV2 valve) which is operational along the outlet line 24, downstream of the SOV valve 29, and suitable for preventing the gas flow to the outlet mouth 27. During filling operations, the NRV2 valve is closed; during fueling operations, the NRV2 valve is open.

Preferably, the NRV2 valve 30 is placed upstream of the second filter 28, considering the direction of the gas flow during fueling operations.

Preferably, the OTV valve 2 comprises an excess flow valve 32 (EFV valve), operating along the outlet line 24, preferably upstream of the NRV2 valve considering the direction of the gas flow during fueling operations, which excess flow valve is suitable for preventing or restricting the gas flow from the tank 1 when the flow exceeds a predefined threshold value.

Preferably, moreover, the OTV valve 2 comprises a temperature sensor 34 (T-sensor) which is configured to detect the temperature in the tank 1 and is connected to a temperature signal line 36 to carry the signal generated by the T-sensor 34 outside the OTV valve 2.

Preferably, moreover, the OTV valve 2 provides an evacuation line 38, configured to put the compartment inside the tank 1 in communication with the external environment, into which it flows via an evacuation mouth 40. In said embodiment, the OTV valve 2 comprises a thermal safety device 42 (TPRD device), operational along the evacuation line 38, which prevents the gas flow to the evacuation mouth 40 in the normal operation of the apparatus (closing configuration). Said TPRD device 42 comprises a temperature-sensitive element that ruptures when the sensed temperature exceeds a predefined threshold value; the rupture of the sensitive element causes it to move into an opening configuration, in which the TPRD device 42 allows gas to pass through, which is then abruptly discharged through the evacuation mouth 40.

Preferably, moreover, the OTV valve 2 comprises a pressure sensor 44 configured to detect the gas pressure, for example immediately upstream of the SOV valve 29, considering the direction of the gas flow during the fueling operations.

Preferably, moreover, the OTV 2 valve is equipped with a by-pass line 46 that connects the inlet/outlet line 14, upstream of the MV valve 24, and the evacuation line 38; in said embodiment, the OTV valve 2 comprises a second manually operable opening/closing valve 48 (BV valve) which, during normal operation of the apparatus, is closed to prevent the gas flow from passing through.

The present invention refers to a non-return valve 100 that, according to the example shown, may be either the NRV1 valve 12 or the NRV2 valve 30 or both.

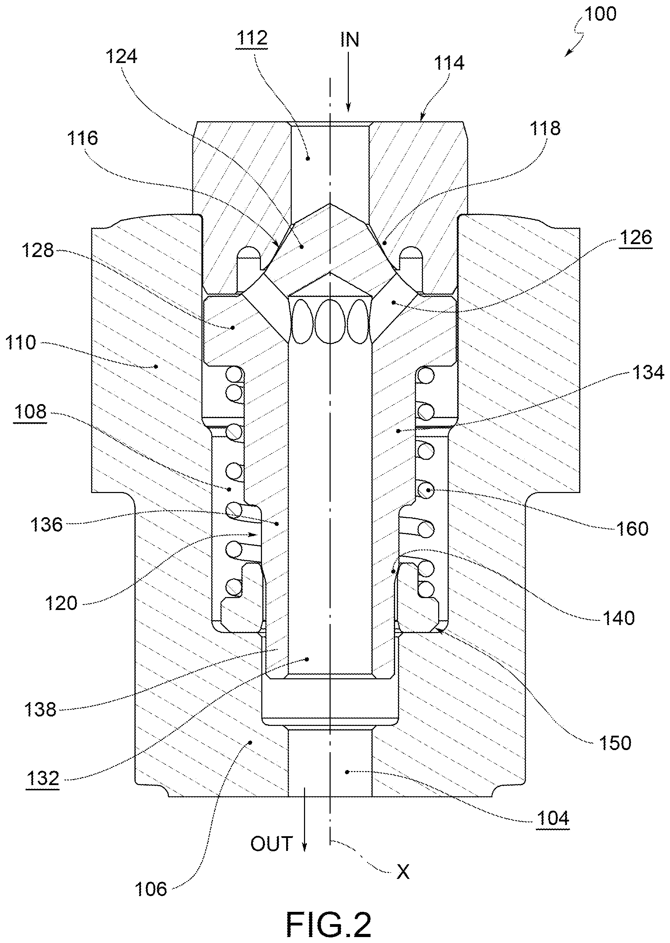

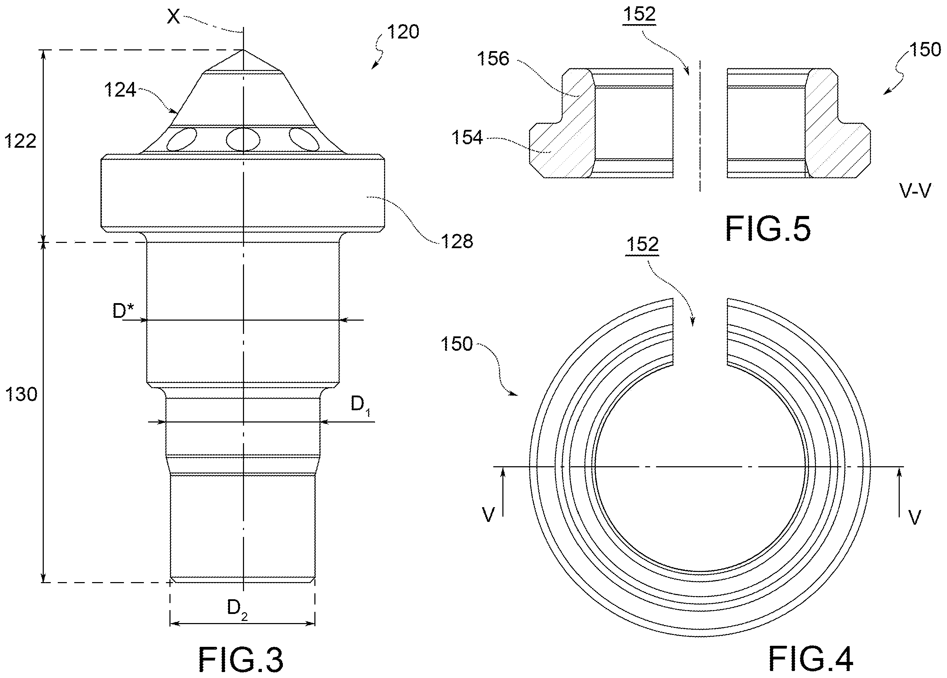

According to a first embodiment (Fig. 2 to 9), a non-return valve 100 comprises a body 102, for example being a portion of the valve body 2a of the OTV valve 2, and an outlet 104, for example formed through a bottom 106 of the body 102.

The non-return valve 100 further comprises a compartment 108, for example formed in the body 102, and preferably delimited annularly by an annular body wall 110 and by the bottom 106.

The non-return valve 100 further comprises an inlet 112, e.g., formed through a bushing 114 applied to the body 102.

The inlet 112 and the outlet 104 are configured to be in fluid communication via the compartment 108.

The non-return valve 100 further comprises a seat 116 at the inlet 112, which seat is flared toward the outlet 104. Preferably, said seat 116 is made in the bushing 114, downstream of the inlet 112, considering the direction of the gas flow during filling operations.

Preferably, the seat 116 is delimited by a seat wall 118, made of a polymeric material, to form a seal. Preferably, the entire bushing 114 is made of said polymeric material and forms a sealing gasket.

The non-return valve 100 further comprises a shutter 120, preferably made in one piece, for example of aluminum or stainless steel, and suitable for closing the fluid connection between the inlet 112 and the outlet 104. In particular, the shutter 120 is translatable along a shutter axis X between a closing position, in which it engages with the seat 116 and closes the fluid connection between the inlet 112 and the outlet 104, and an opening position, in which it is disengaged from the seat 106, so that the inlet 112 and the outlet 104 are in communication.

The shutter 120 comprises a head 122 comprising a shutter portion 124, preferably of a frustoconical shape, which is suitable for abutting tightly with the seat wall 118 to close the non-return valve 100.

The head 122 further comprises at least one head passage 126 which connects the outside of the head 122 with the inside; for example, a plurality of head passages 126 having a progression inclined with respect to the shutter axis X is provided.

Preferably, the head 122 further comprises a radially projecting abutment wall 128 as discussed below.

The shutter 120 further comprises a stem 130 that extends predominantly along the shutter axis X and has internally a stem passage 132, open towards the outlet 104, into which the head passages 126 flow.

Externally, from the inlet side 112 toward the outlet side 104, the stem 130 has a stepped conformation that forms a guide section 134 having a guide diameter D*, a first functional section 136 having a first diameter D1, and a second functional section 138 having a second diameter D2, where D* > D1 > D2. Preferably, the first functional section 136 is connected to the second functional section 138 by a flared, for example frustoconical, intermediate section 140.

The valve 100 further comprises an elastically deformable damper ring 150, e.g., made of PTFE, resting on the bottom 106 of the body 102 and traversed at least partially by the first functional section 138 of the stem 130 of the shutter 120.

Preferably, the damper ring 150 has a cut 152 that interrupts its circumferential continuity, increasing the structural elasticity of the component.

Preferably, the damper ring 150 has externally a stepped conformation that forms a support portion 154, having a larger diameter and directly resting on the bottom 106 of the body 102, and a secondary portion 156, having a smaller diameter and projecting axially from the support portion 154.

The valve 100 further comprises a helical spring 160, preferably made of stainless steel, which is threaded on the stem 130 of the shutter 120 and is precompressed so as to permanently bias the shutter 120 toward the closing configuration.

In particular, the spring 160 abuts with the abutment wall 128 and is fitted without interference on the guide section 134 of the stem 130, and abuts with the support portion 154 of the damper ring 150 and is fitted with interference on the secondary portion 156 thereof. This means that the spring 160 is configured to radially tighten the damper ring 150.

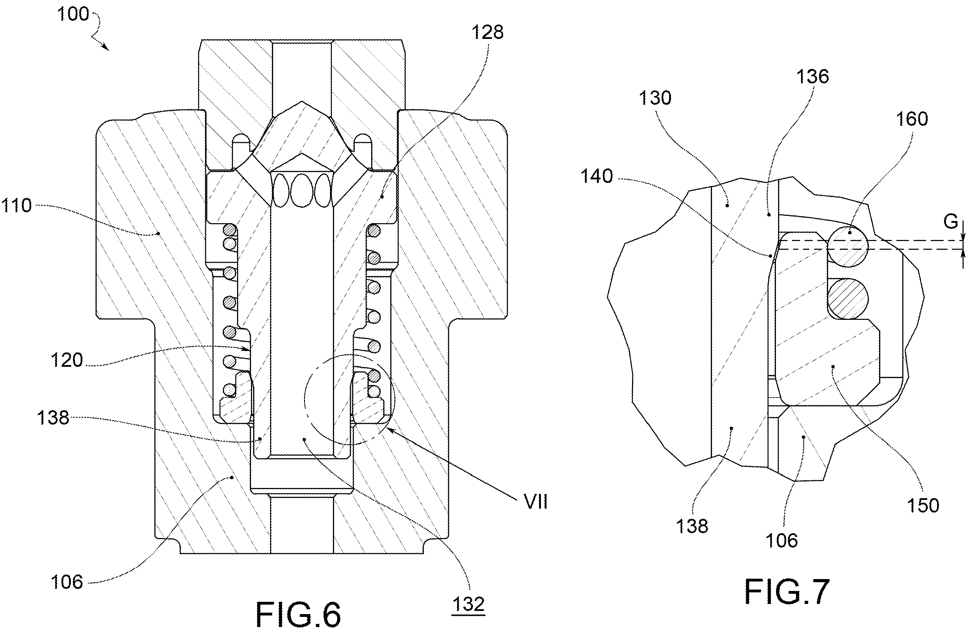

In a closing configuration of the non-return valve (Fig. 6), which is achieved when the gas pressure is greater at the outlet 104 than at the inlet 112, the spring 160 pushes the shutter 120 so that the shutter portion 124 is tightly abutted against the seat wall 118, closing the connection between the outlet 104 and the inlet 112. At the same time, the spring 160 holds the damper ring 150 firmly in place, resting on the bottom 106.

In this configuration, the shutter is in the closing position so that the stem 130 does not engage the damper ring 150. In particular, between the damper ring 150, and in particular the secondary portion 154, and the first functional section 136 of the stem 130, there is a clearance G, despite the spring radially tightening the damper ring.

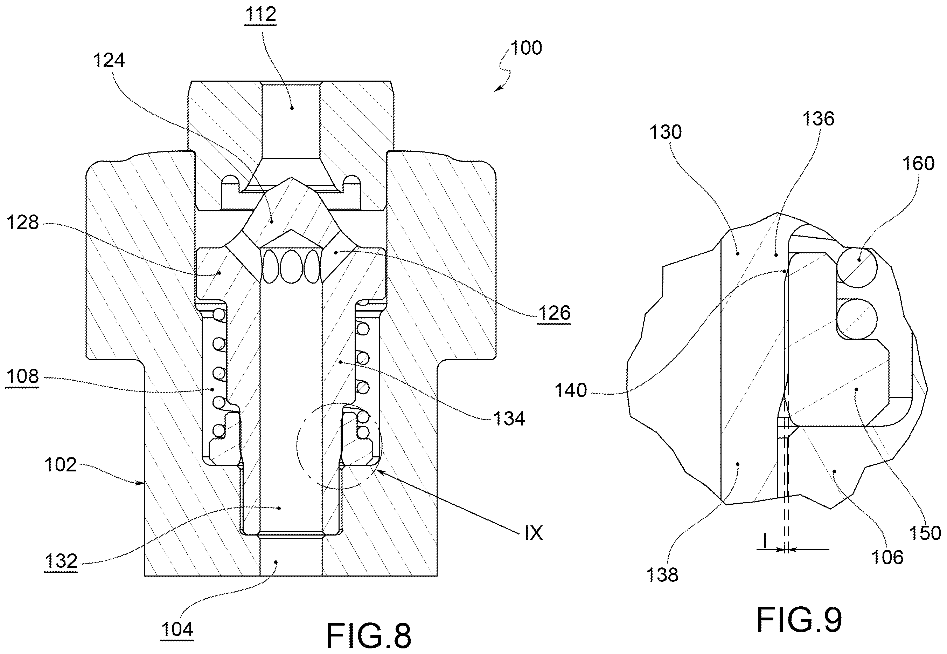

In an opening configuration of the non-return valve (Fig. 8), which is achieved when the gas pressure is greater at the inlet 112 than at the outlet 104, the action of the spring 160 is overcome by the gas, which pushes the shutter 120 back so that the shutter portion 124 separates from the seat wall 118, opening the connection between the outlet 104 and the inlet 112. In particular, the gas flows from the inlet 112, enters the head passages 126 and then the stem passage 132, and exits from the outlet 104. The damper ring 150 is stationary in position, resting on the bottom 106 and pushed by the spring 160.

In said configuration, the shutter is in the opening position so that the stem 130 engages the damper ring 150 with interference. In particular, between the damper ring 150, and in particular the secondary portion 154, and the first functional section 136 of the stem 130, there is an interference I.

During filling operations, as mentioned above, there are considerable fluctuations in the entering gas pressures, especially in the initial and final stages. This causes the non-return valve to switch continuously and abruptly from the closing to the opening configuration and vice versa.

Such behavior would be the source of vibratory phenomena in the valve, as occurs in solutions of the prior art, if not for the presence of the damper ring and the continuous alternation of clearance and interference between the shutter and the damper ring.

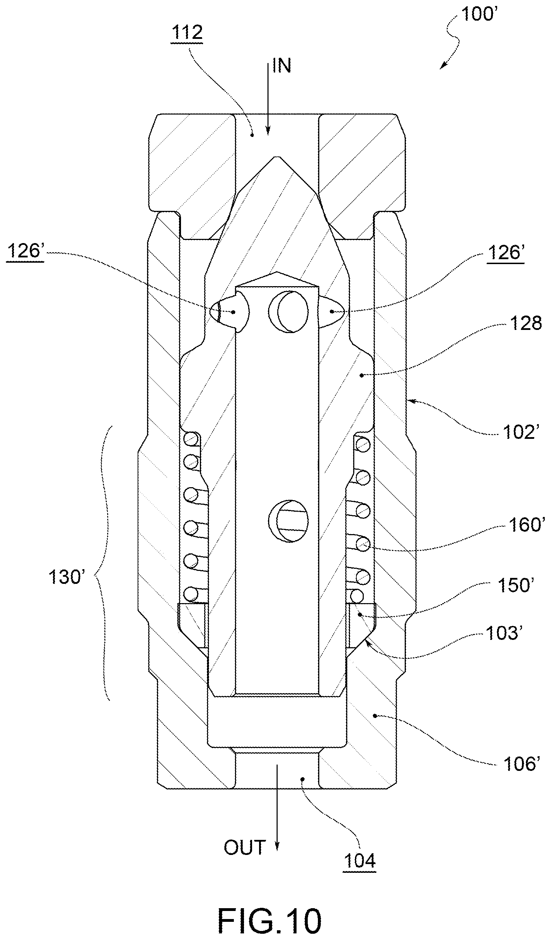

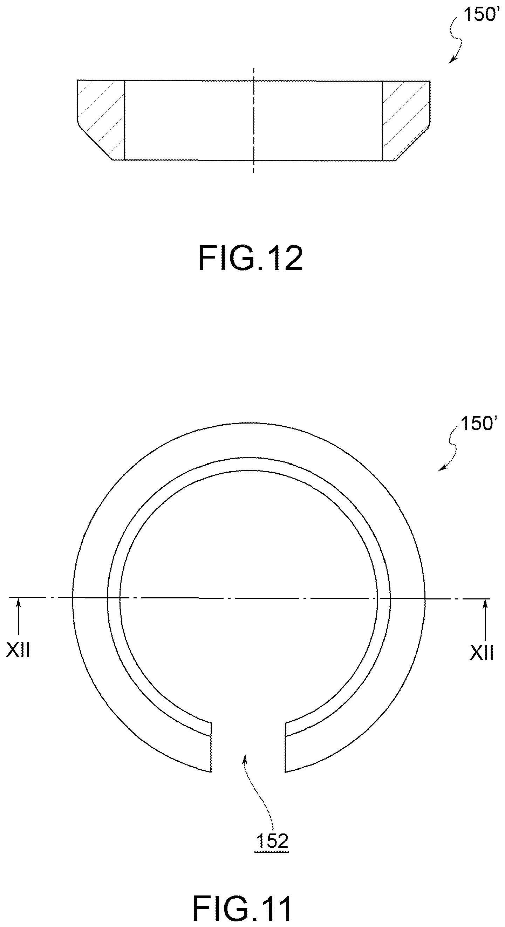

According to a known configuration, not part of the present invention (Fig. 10 to 12), the body 102' is an enclosure inserted into a seat provided in the valve body.

Preferably, moreover, the head passages 126' extend only radially.

Preferably, moreover, the stem 130' comprises a guide section 134' of the shutter 120, on which the spring and a functional section 136 with a constant diameter that extends to the end of the stem 130' are fitted.

The bottom 106' of the body 102' has a flared support surface 103', converging toward the outlet, on which the damper ring 150' rests. In other words, the compartment 108 is at least partially delimited by the support surface 103'.

Said damper ring 150' has a flared bottom surface 151', corresponding to the support surface 103' of the body 102' with which it abuts.

The spring 160' operates between the abutment wall 128 and damper ring 150', axially pushing said damper ring. Due to the flared shape of the support surface 103', the damper ring 150' radially tightens (i.e., contracts) on the functional section 136' of the stem 130.

Between the closing configuration and the opening configuration, the magnitude of the axial action with which the spring acts on the damper ring varies; in particular, the action is less intense in the closing configuration, in which the spring is less compressed, and more intense in the opening configuration, in which the spring is more compressed.

Consequently, preferably, in the closing configuration, the damper ring (which expands) engages the functional section 136' with less interference, while in the opening configuration, the damper ring (which contracts) engages the functional section 136' with maximum friction, performing a damping action.

Innovatively, the non-return valve according to the present invention overcomes the drawbacks mentioned above with reference to the prior art, in that it enables vibratory phenomena that are generated during the tank filling step to be avoided or limited.

It is clear that those skilled in the art may make changes to the non-return valve described above in order to meet incidental needs, which changes all fall within the scope of protection defined in the following claims.

## Claims

1. Non-return valve (100) for managing a high-pressure hydrogen flow in a fuel cell automotive system, comprising:
- an outlet (104), a compartment (108), and an inlet (112), wherein the inlet (112) and the outlet (104) are configured to be in fluid communication through the compartment (108);
- a shutter (120), comprising a head (122) and a stem (130), which is translatable in the compartment (108) between a closing position, in which it closes the connection between the inlet (112) and the outlet (104), and an opening position, in which it opens the connection between the inlet (112) and the outlet (104);
- a spring (160) which is inserted onto the stem (130) of the shutter (120) and which is precompressed to permanently bias the shutter (120) towards the closing position;
- an elastically deformable damper ring (150) which is arranged in the compartment (108), coaxially to the stem (130 ), and which is permanently biased by the spring (160);
wherein
- in said opening position, the damper ring (150 ), under the bias of said spring (160 ), grips the stem (130) of the shutter (120) with an opening damping action;
- in said closing position, the damper ring (150) disengages the stem (130) with a closing damping action which is less than the opening damping action; **characterized in that**
- the stem (130) comprises a first functional section (136), having a first diameter (D1), and a second functional section (138), having a second diameter (D2), where D1 > D2, and in the opening position, the damper ring grips said first functional section (136).

2. Non-return valve according to claim 1, wherein, in the closing position, the damper ring (150) is disengaged from the second functional section (138).

3. Apparatus for managing the hydrogen flow for a fuel cell traction system, comprising a non-return valve (30;12; 100) according to any one of the preceding claims.

4. Apparatus according to claim 3, comprising:
- a multifunction valve (2) which is applicable to a tank and suitable for managing the gas flow entering the tank during filling (filling step) and exiting the tank towards downstream user devices when using the vehicle (fueling step), said multifunction valve being provided with an inlet mouth (10);
- wherein said non-return valve (12; 100) is arranged outside the multifunction valve (2) and operates upstream of the inlet mouth (10).

5. Apparatus according to claim 3, comprising:
- a multifunction valve (2) which is applicable to a tank and suitable for managing the gas flow entering the tank during filling (filling step) and exiting the tank towards downstream user devices when using the vehicle (fueling step), said multifunction valve being provided with an inlet mouth (10);
- wherein the multifunction valve (2) comprises a magnetically operable solenoid valve (29), which is open during the fueling step;
- and wherein said non-return valve (30; 100) is arranged inside the multifunction valve (2) and operates downstream of said solenoid valve (29), considering the gas direction during the filling step.

## Patentansprüche

1. Rückschlagventil (100) zum Steuern eines Hochdruckwasserstoffstroms in einem Kraftfahrzeug-Brennstoffzellensystem, umfassend:
- einen Auslass (104), einen Raum (108) und einen Einlass (112),
wobei der Einlass (112) und der Auslass (104) dazu konfiguriert sind, in Fluidverbindung über den Raum (108) zu sein;
- einen Verschluss (120), umfassend einen Kopf (122) und einen Schaft (130), der in dem Raum (108) zwischen einer Schließstellung, in der er die Verbindung zwischen dem Einlass (112) und dem Auslass (104) schließt, und einer Öffnungsstellung, in der er die Verbindung zwischen dem Einlass (112) und dem Auslass (104) öffnet, verschiebbar ist;
- eine Feder (160), die auf den Schaft (130) des Verschlusses (120) eingeführt wird und die vorgespannt ist, um den Verschluss (120) dauerhaft zu der Schließstellung zu drücken;
- einen elastisch verformbaren Dämpfungsring (150), der in dem Raum (108) koaxial zu dem Schaft (130) angeordnet ist und dauerhaft durch die Feder (160) vorgespannt wird; wobei
- in der Öffnungsstellung der Dämpfungsring (150) unter Wirkung der Feder (160) den Schaft (130) des Verschlusses (120) mit einer Öffnung-Dämpfungswirkung greift;
- in der Schließstellung der Dämpfungsring (150) den Schaft (130) mit einer Schließ-Dämpfungswirkung löst, die geringer als die Öffnung-Dämpfungswirkung ist;
**dadurch gekennzeichnet, dass**
- der Schaft (130) einen ersten funktionellen Abschnitt (136) mit einem ersten Durchmesser (D1) und einen zweiten funktionellen Abschnitt (138) mit einem zweiten Durchmesser (D2) umfasst, wobei D1 > D2, und wobei in der Öffnungsstellung der Dämpfungsring den ersten funktionellen Abschnitt (136) greift.

2. Rückschlagventil nach Anspruch 1, wobei in der Schließstellung der Dämpfungsring (150) von dem zweiten funktionellen Abschnitt (138) gelöst wird.

3. Vorrichtung zum Steuern des Wasserstoffstroms für ein Brennstoffzellen-Antriebssystem, umfassend ein Rückschlagventil (30; 12; 100) nach einem der vorhergehenden Ansprüche.

4. Vorrichtung nach Anspruch 3, umfassend:
- ein Multifunktionsventil (2), das an einem Behälter angebracht werden kann und geeignet ist, den Gasstrom zu steuern, der beim Befüllen (Füllungsschritt) in den Behälter eintritt und der aus dem Behälter zu nachgeschalteten Benutzervorrichtungen austritt, wenn das Fahrzeug verwendet wird (Betankungsschritt), wobei das Multifunktionsventil mit einer Einlassöffnung (10) versehen ist;
- wobei das Rückschlagventil (12, 100) außerhalb des Multifunktionsventils (2) angeordnet ist und stromaufwärts der Einlassöffnung (10) arbeitet.

5. Vorrichtung nach Anspruch 3, umfassend:
- ein Multifunktionsventil (2), das an einem Behälter angebracht werden kann und geeignet ist, den Gasstrom zu steuern, der beim Befüllen (Füllungsschritt) in den Behälter eintritt und der aus dem Behälter zu nachgeschalteten Benutzervorrichtungen austritt, wenn das Fahrzeug verwendet wird (Betankungsschritt), wobei das Multifunktionsventil mit einer Einlassöffnung (10) versehen ist;
- wobei das Multifunktionsventil (2) ein magnetisch betätigbares Magnetventil (29) umfasst, das während des Betankungsschritts offen ist;
- und wobei das Rückschlagventil (30, 100) innerhalb des Multifunktionsventils (2) angeordnet ist und stromabwärts des Magnetventils (29) arbeitet, unter Berücksichtigung der Gasrichtung während des Füllungsschritt.

## Revendications

1. Clapet anti-retour (100) pour la gestion d'un flux d'hydrogène à haute pression dans un système de pile à combustible automobile, comprenant :
- une sortie (104), un compartiment (108) et une entrée (112), dans lequel l'entrée (112) et la sortie (104) sont configurées pour être en communication fluidique à travers le compartiment (108) ;
- un obturateur (120), comprenant une tête (122) et une tige (130), lequel est translatable dans le compartiment (108) entre une position de fermeture, dans laquelle il ferme la connexion entre l'entrée (112) et la sortie (104), et une position d'ouverture, dans laquelle il ouvre la connexion entre l'entrée (112) et la sortie (104) ;
- un ressort (160) qui est inséré sur la tige (130) de l'obturateur (120) et qui est pré-comprimé pour solliciter en permanence l'obturateur (120) vers la position de fermeture ;
- un anneau amortisseur élastiquement déformable (150) qui est disposé dans le compartiment (108), coaxialement à la tige (130) et qui est sollicité en permanence par le ressort (160) ;
dans lequel
- en ladite position d'ouverture, l'anneau amortisseur (150), sous l'effet du ressort (160), saisit la tige (130) de l'obturateur (120) avec une action d'amortissement à l'ouverture ;
- en ladite position de fermeture, l'anneau amortisseur (150) désengage la tige (130) avec une action d'amortissement à la fermeture qui est inférieure à l'action d'amortissement à l'ouverture ;
**caractérisé en ce que**
- la tige (130) comprend une première section fonctionnelle (136), ayant un premier diamètre (D1), et une seconde section fonctionnelle (138), ayant un second diamètre (D2), où D1 > D2, et en position d'ouverture, l'anneau amortisseur saisit ladite première section fonctionnelle (136).

2. Clapet anti-retour selon la revendication 1, dans lequel, en position de fermeture, l'anneau amortisseur (150) est désengagé de la seconde section fonctionnelle (138).

3. Dispositif pour la gestion du flux d'hydrogène d'un système de traction à pile à combustible, comprenant un clapet anti-retour (30 ; 12 ; 100) selon l'une quelconque des revendications précédentes.

4. Dispositif selon la revendication 3, comprenant :
- une vanne multifonction (2) qui est applicable à un réservoir et adaptée à la gestion du flux gazeux entrant dans le réservoir pendant le remplissage (étape de remplissage) et sortant du réservoir vers des dispositifs utilisateurs en aval lors de l'utilisation du véhicule (étape d'alimentation), ladite vanne multifonction étant pourvue d'une bouche d'entrée (10) ;
- dans lequel ledit clapet anti-retour (12, 100) est disposé à l'extérieur de la vanne multifonction (2) et fonctionne en amont de la bouche d'entrée (10).

5. Dispositif selon la revendication 3, comprenant :
- une vanne multifonction (2) qui est applicable à un réservoir et adaptée à la gestion du flux gazeux entrant dans le réservoir pendant le remplissage (étape de remplissage) et sortant du réservoir vers des dispositifs utilisateurs en aval lors de l'utilisation du véhicule (étape d'alimentation), ladite vanne multifonction étant pourvue d'une bouche d'entrée (10) ;
dans lequel la vanne multifonction (2) comprend une vanne électromagnétique (29) commandable magnétiquement qui est ouverte, pendant l'étape d'alimentation ;
et dans lequel ledit clapet anti-retour (30, 100) est disposé à l'intérieur de la vanne multifonction (2) et fonctionne en aval de ladite vanne électromagnétique (29), en tenant compte de la direction du gaz pendant l'étape de remplissage.
